# EUROPEAN PATENT APPLICATION

(11) **EP 3 632 216 A1**
(43) Date of publication of application: **08.04.2020**
(21) Application number: 18805141.1
(22) Date of filing: 23.05.2018
(51) Int. Cl.: A23L 3/28, A23L 2/42

(54) **STERILIZATION METHOD AND STERILIZATION DEVICE**

(30) Priority: 26.05.2017 JP 2017104646
(71) Applicant: Ushio Denki Kabushiki Kaisha, Tokyo 100-8150 (JP)
(72) Inventor: NAITO,Keisuke, Tokyo 100-8150 (JP)
(74) Representative: Tomerius, Isabel
(86) International application number: PCT/JP2018/019749
(87) International publication number: WO 2018/216709

(57) **Abstract**

Provided are a sterilization method for liquids, whereby flavor deterioration can be suppressed while securing a sterilization effect, and a sterilization device. The sterilization method according to the present invention comprises irradiating a solution to be treated, which is a beverage other than water, substantially not with ultraviolet light with an emission wavelength of 260 nm or less but with ultraviolet light with an emission wavelength of 280-320 nm inclusive.

## Description

### TECHNICAL FIELD

The present invention relates to a sterilization method and sterilization device for beverages other than water.

### BACKGROUND ART

Conventionally, as a sterilization treatment using light, there is treatment which applies pulsed light from the ultraviolet to the visible range. In recent years, a sterilization treatment method using ultraviolet light is expected.

In particular, for food sterilization, disinfection using ultraviolet light (UV disinfection) is considered as a method in which the flavor is less likely to deteriorate than heat sterilization. From the viewpoint of luminous efficiency, there is known a method in which a mercury lamp (main emission wavelength is 254 nm) is used to sterilize an object by irradiating the object with ultraviolet light emitted from the lamp while suppressing deterioration of flavor (see Patent Documents 1 and 2 below).

Patent Document 3 below describes an apparatus that irradiates ultraviolet light as a sterilization treatment for fruit juice beverages, jellies, mousses and the like that are food and drink. Patent Document 3 further describes that sterilization treatment is performed by using ultraviolet light having a wavelength range of 200 to 300 nm, particularly 220 nm to 280 nm (UV-C).

### PRIOR ART DOCUMENTS

### PATENT DOCUMENTS

Patent Document 1: JP-A-2004-201535
Patent Document 2: JP-B2-5924394
Patent Document 3: WO 2016/186068 A

### SUMMARY OF THE INVENTION

### PROBLEMS TO BE SOLVED BY THE INVENTION

It is an object of the present invention to provide a sterilization method and a sterilization device that further suppress deterioration of flavor while ensuring a sterilization effect in the sterilization method for a liquid material.

### MEANS FOR SOLVING THE PROBLEMS

Conventionally, deterioration of flavor of foods including beverages has been analyzed by sensory inspection. On the other hand, with recent advances in chemical analysis technology, quantitative analysis using an analyzer has become possible. The present inventor conducted a quantitative analysis with this analyzer, and newly found a problem that, in a case of sterilizing a liquid material by irradiation with ultraviolet light, when light (wavelength: 254 nm) from a mercury lamp which was conventionally preferred was used, there was a problem that taste and smell (fragrance) changed due to generation of a new substance that did not exist before treatment or a large change in the amount of a specific substance.

In the sterilization method according to the present invention, a to-be-treated solution, which is a beverage other than water, is irradiated with ultraviolet light having an emission wavelength of 280 nm or more and 320 nm or less without being substantially irradiated with ultraviolet light having an emission wavelength of 260 nm or less.

It was confirmed that by irradiating the to-be-treated solution with light in the above-described wavelength band (UV-B), it was possible to suppress generation of substances that caused bitterness, unpleasant taste components, and malodorous components that occurred when light having a wavelength of 254 nm was irradiated and it was possible to sterilize the solution while preventing inhibition of flavor.

The sterilization device according to the present invention includes an ultraviolet light irradiation device which irradiates a to-be-treated solution, which is a beverage other than water, with ultraviolet light, having a main emission wavelength of 280 nm or more and 320 nm or less and substantially free of components having an emission wavelength of 260 nm or less, along a flow path through which the solution flows.

### EFFECT OF THE INVENTION

The present invention achieves a sterilization method and a sterilization device that further suppresses deterioration of flavor while ensuring a sterilization effect.

### BRIEF DESCRIPTION OF THE DRAWINGS

Fig. 1 is a cross-sectional view taken along a flow path, schematically showing a configuration of a main part in an example of a sterilization device of the present invention.
Fig. 2 is a cross-sectional view taken along line A-A in Fig. 1.
Fig. 3 is an emission spectrum of each light source in Example 1, Example 2, and Comparative Example 1.
Fig. 4A is an analysis result of a GC/MS/Olfactometry for coffee beverages.
Fig. 4B is a graph illustrated by changing a drawing mode of the graph of Fig. 4A.
Fig. 5A is an analysis result of the GC/MS/Olfactometry for apple juice.
Fig. 5B is a graph illustrated by changing a drawing mode of the graph of Fig. 5A.

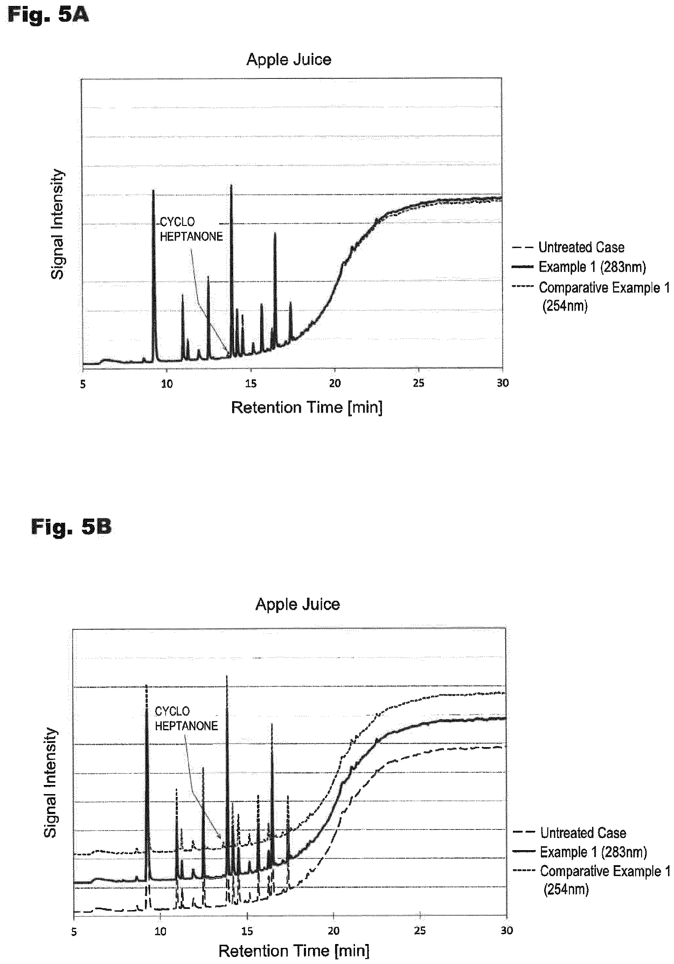

Fig. 5A is an analysis result of the GC/MS/Olfactometry for lemon juice.

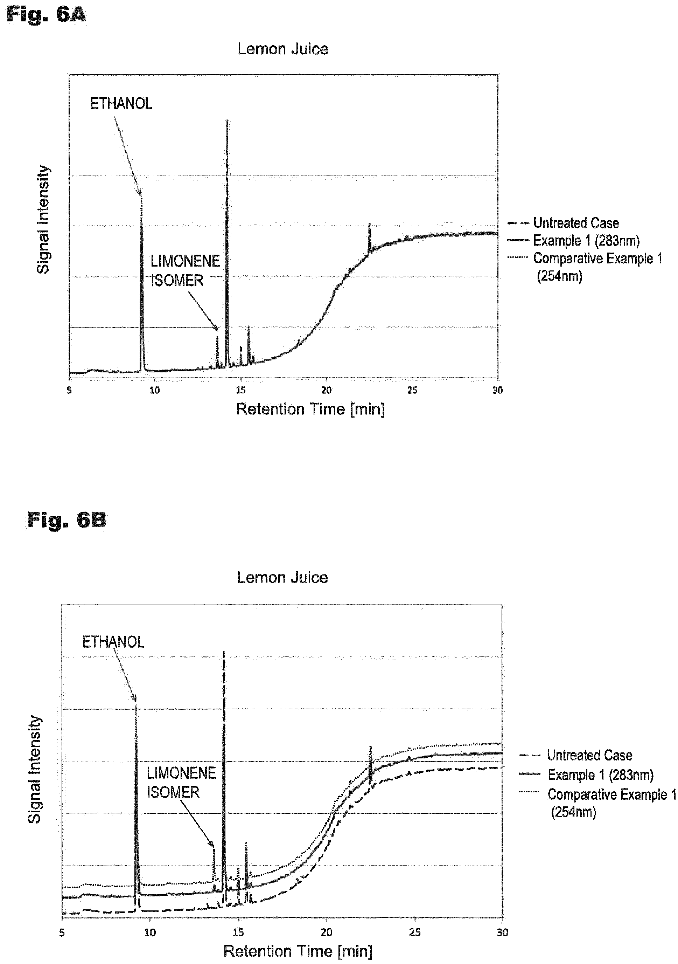

Fig. 6B is a graph illustrated by changing a drawing mode of the graph of Fig. 6A.

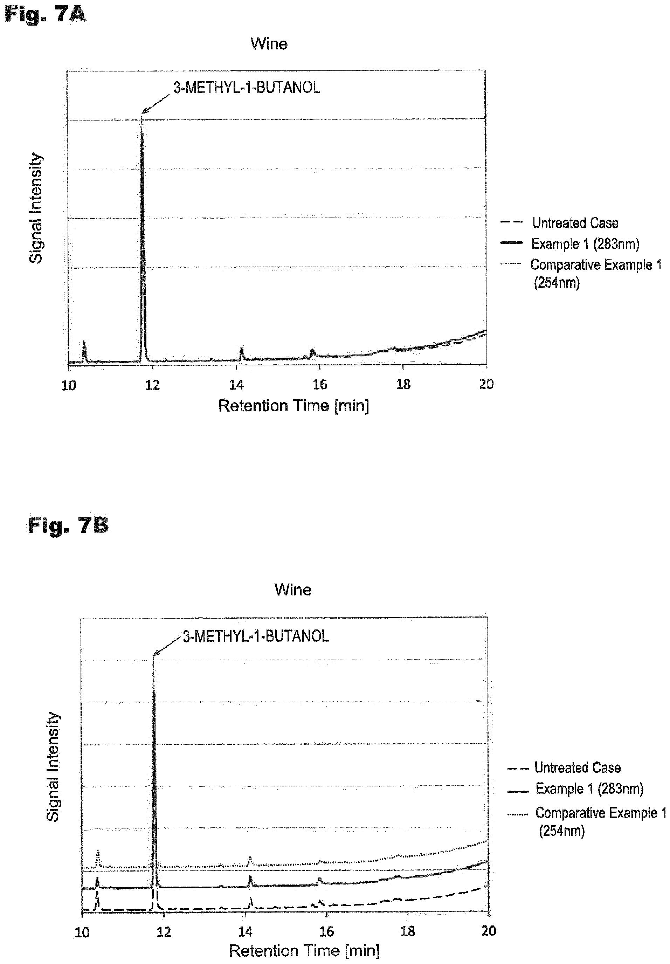

Fig. 7A is an analysis result of the GC/MS/Olfactometry for wine.
Fig. 7B is a graph illustrated by changing a drawing mode of the graph of Fig. 7A.

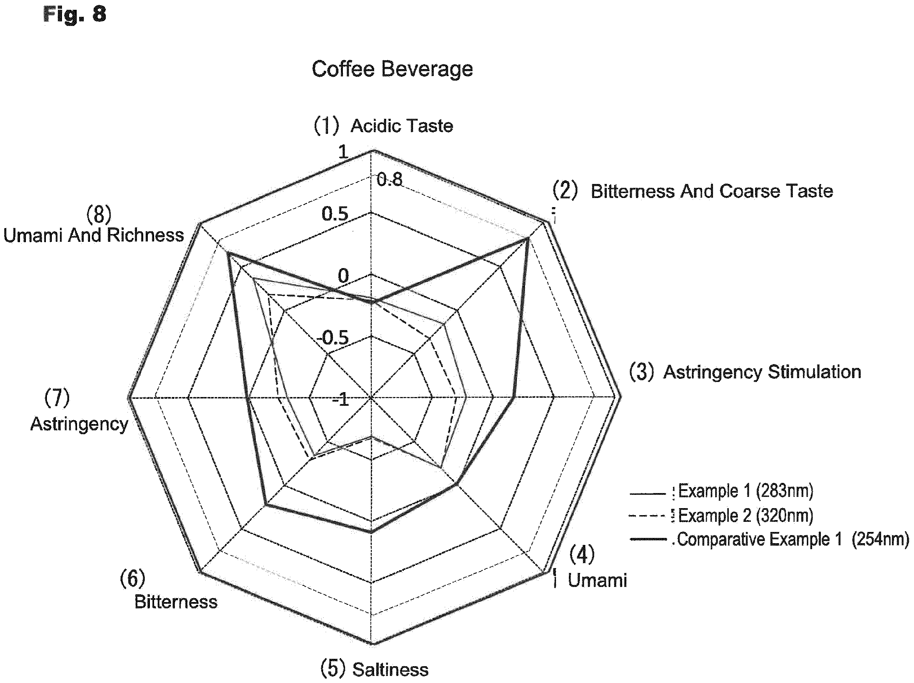

Fig. 8 is an analysis result of a taste sensor for a coffee beverage.

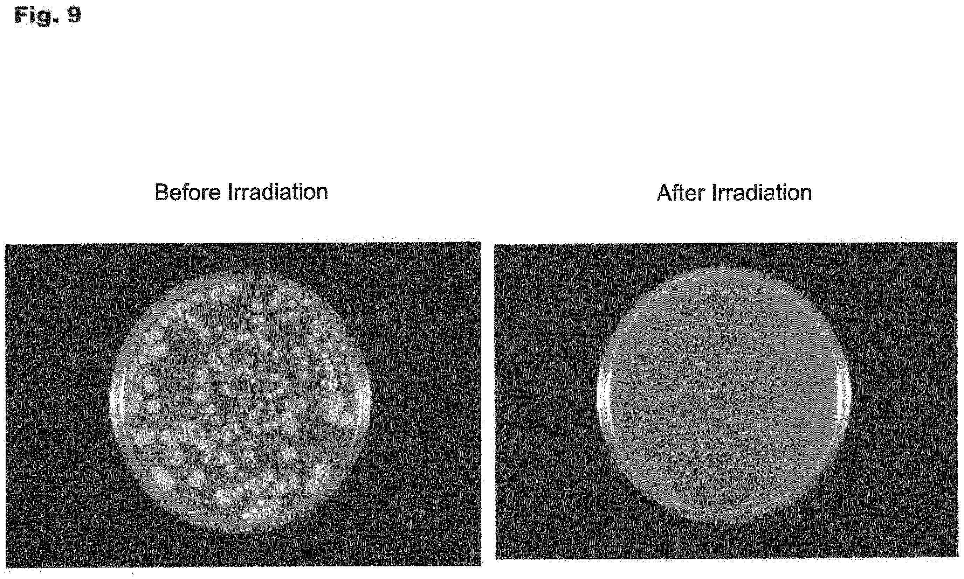

Fig. 9 is a photograph showing a sterilization effect when an ultraviolet light irradiation treatment is performed using a light source of Example 1.

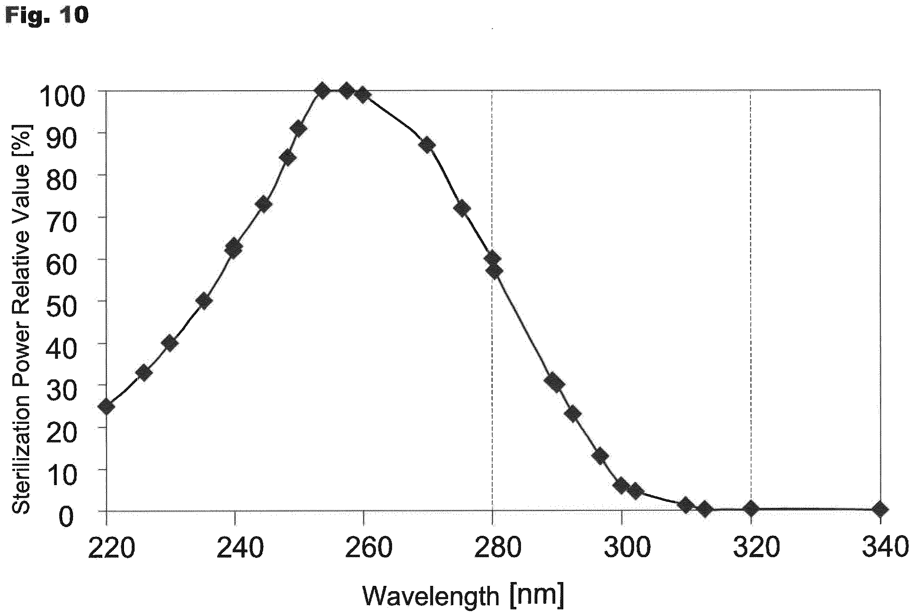

Fig. 10 is a graph showing relative values of sterilization power for each wavelength.

### MODE FOR CARRYING OUT THE INVENTION

A treatment target in a sterilization device and a sterilization method of the present invention is a to-be-treated solution which is a beverage other than water. Examples of such a to-be-treated solution include alcoholic beverages such as wine, sake, and beer, coffee, juice, and liquid flavoring themselves.

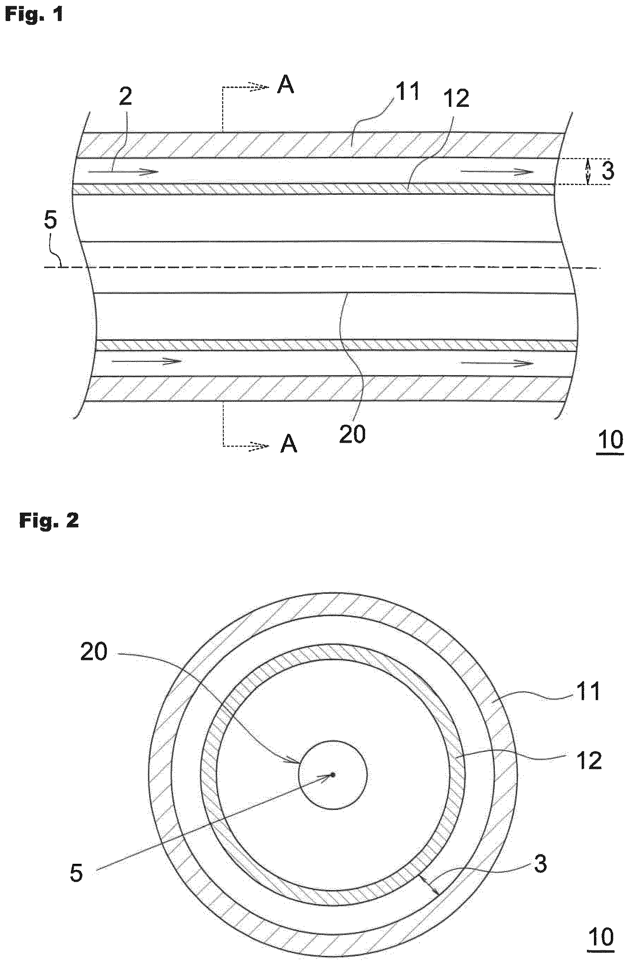

Fig. 1 is a cross-sectional view taken along a flow path, schematically showing a configuration of a main part in an example of the sterilization device of the present invention. Fig. 2 is a cross-sectional view taken along line A-A in Fig. 1. In each drawing, the dimensional ratio of the drawings does not necessarily coincide with the actual dimensional ratio.

This sterilization device includes a reactor 10. The reactor 10 includes a flow path 3 through which a to-be-treated solution 2 flows, and an ultraviolet light irradiation device 20 provided along the flow path 3. The ultraviolet light irradiation device 20 is configured to emit ultraviolet light having a main emission wavelength of 280 nm or more and 320 nm or less and substantially free of components having an emission wavelength of 260 nm or less.

In this specification, the light having a main emission wavelength of 280 nm or more and 320 nm or less refers to light whose wavelength band indicating a half value of an emission spectrum is in the range of 280 nm or more and 320 nm or less. The light substantially free of components having an emission wavelength of 260 nm or less refers to light not containing components at 260 nm or less in a wavelength band indicating the half value of the emission spectrum.

The reactor 10 has a cylindrical outer tube 11 and a cylindrical inner tube 12 that are arranged coaxially with each other. The flow path 3 for the to-be-treated solution 2 is constituted by a region sandwiched between an inner peripheral surface of the outer tube 11 and an outer peripheral surface of the inner tube 12.

Materials constituting the outer tube 11 in the reactor 10 are not particularly limited, and for example, a metal material such as stainless steel can be used. Materials constituting the inner tube 12 in the reactor 10 may be those through which the ultraviolet light from the ultraviolet light irradiation device 20 transmits, and for example, quartz glass and the like can be used.

The ultraviolet light irradiation device 20 is disposed along a central axis 5 of the reactor 10 inside the inner tube 12 in the reactor 10. As described above, the ultraviolet light irradiation device 20 includes a light source that emits ultraviolet light having a main emission wavelength of 280 nm or more and 320 nm or less and substantially free of components having an emission wavelength of 260 nm or less. When light containing a component having an emission wavelength of 260 nm or less (for example, light from a low-pressure mercury lamp (254 nm emission line)) is emitted to the to-be-treated solution 2, the flavor of the to-be-treated solution 2 is deteriorated. This point will be described later with reference to examples.

As the light source used as the ultraviolet light irradiation device 20, it is possible to use, for example, an XeBr excimer lamp (peak wavelength is 283 nm) in which a mixed gas of Xe and Br is sealed as a discharge gas, an excimer lamp (peak wavelength is 289 nm) in which Br₂ is sealed as a discharge gas, and an XeCl excimer lamp (peak wavelength is 308 nm) in which a mixed gas of Xe and Cl is sealed as a discharge gas.

Further, as the light source used as the ultraviolet light irradiation device 20, for example, an ultraviolet light emitting fluorescent lamp can be used. The ultraviolet light emitting fluorescent lamp irradiates a phosphor with light serving as exciting light and emitted from an excimer generated by dielectric barrier discharge, and emits ultraviolet light serving as radiated light and falling within a specific wavelength range obtained when the phosphor is excited. As the phosphor, for example, bismuth-activated yttrium aluminum borate that emits ultraviolet light having a peak wavelength of 290 nm by excitation can be used. Further, as the phosphor, cerium-activated lanthanum phosphate having an emission peak with a wide full width at half maximum at a peak wavelength near 320 nm by excitation may be used.

Furthermore, as the light source used as the ultraviolet light irradiation device 20, an LED element configured to have an emission wavelength of 280 nm or more and 320 nm or less and be substantially free of a component having an emission wavelength of 260 nm or less can also be used.

The amount of ultraviolet light applied to the solution 2, to be treated, by the ultraviolet light irradiation device 20 is preferably, for example, 170 mJ/cm² or more, more preferably 170 to 500 mJ/cm². When the ultraviolet light irradiation amount is 170 mJ/cm² or more, sterilization treatment can be performed while suppressing changes in the taste and odor of the solution 2 itself.

The diameter of the flow path 3 in the reactor 10, that is, the distance between the inner peripheral surface of the outer tube 11 and the outer peripheral surface of the inner tube 12, is preferably 0.05 to 1 mm, for example. By adopting such a configuration, even if the to-be-treated solution 2 is formed of a material having a low transmittance of ultraviolet light from the ultraviolet light irradiation device 20 (for example, 99% of the light amount of the ultraviolet light applied to the solution 2 is opaque), the solution 2 can be sterilized uniformly.

The flow rate of the to-be-treated solution 2 circulated in the flow path 3 and the size of a region irradiated with ultraviolet light in the flow path 3 (that is, in the light source included in the ultraviolet light irradiation device 20, the length relating to the direction of the flow path 3) and other conditions can be appropriately set such that the ultraviolet light irradiation amount is within the above-described specific range.

In the sterilization device, the to-be-treated solution 2 is introduced into the flow path 3 and is radiated with ultraviolet light in the above-described wavelength band emitted from the ultraviolet light irradiation device 20 in the process of being circulated in the flow path 3, whereby the solution 2 is sterilized. Thereby, as shown in the results of examples described later, the sterilization effect can be shown while suppressing deterioration of the flavor of the to-be-processed solution 2 as a beverage.

Although the embodiment of the present invention has been described above, the present invention is not limited to the above-described embodiment, and various changes or modifications may be added to the embodiment. For example, the reactor 10 only needs to have a structure in which the ultraviolet light irradiation device 20 is provided along the flow path through which the to-be-treated solution 2 is circulated, and is not limited to the above structure.

### EXAMPLES

The effects of the present invention will be described below with reference to examples.

The reactor 10 having the following specifications was manufactured according to the configuration shown in Fig. 1.

The outer tube 11 is formed of stainless steel and has an inner diameter of ϕ27 mm. The inner tube 12 is formed of quartz glass and has an outer diameter of ϕ26.5 mm and a wall thickness of 1.0 mm. The length of the region irradiated with ultraviolet light from the ultraviolet light irradiation device 20 is 80 mm. The distance between the inner peripheral surface of the outer tube 11 and the outer peripheral surface of the inner tube 12, that is, a radial width of the flow path 3 is 0.5 mm.

### (Example 1)

As the light source included in the ultraviolet light irradiation device 20, a XeBr excimer lamp which emits ultraviolet light having a peak wavelength of 283 nm (half value was 280 nm to 286 nm) was used. The emission length of the XeBr excimer lamp is 80 mm.

### (Example 2)

As a light source included in the ultraviolet light irradiation device 20, an ultraviolet excimer fluorescent lamp (UV-XEFL320BB manufactured by USHIO INC.) that emits ultraviolet light having a peak wavelength of 320 nm (half value was 310 nm to 360 nm) was used. The emission length of the ultraviolet excimer fluorescent lamp is 80 mm.

### (Example 3)

As a light source included in the ultraviolet light irradiation device 20, an ultraviolet excimer fluorescent lamp (UV-XEFL290BB manufactured by USHIO INC.) that emits ultraviolet light having a peak wavelength of 290 nm (half value was 270 nm to 320 nm) was used. The emission length of the ultraviolet excimer fluorescent lamp is 80 mm.

### (Comparative Example 1)

As a light source included in the ultraviolet light irradiation device 20, a low-pressure mercury lamp which emits ultraviolet light having a peak wavelength of 254 nm (half value was 251 nm to 257 nm) was used. The emission length of the low-pressure mercury lamp is 80 mm.

### (Comparative Example 2)

As a light source included in the ultraviolet light irradiation device 20, a KrCl excimer lamp which emits ultraviolet light having a peak wavelength of 222 nm (half value was 215 nm to 229 nm) was used. The emission length of the KrCl excimer lamp is 80 mm.

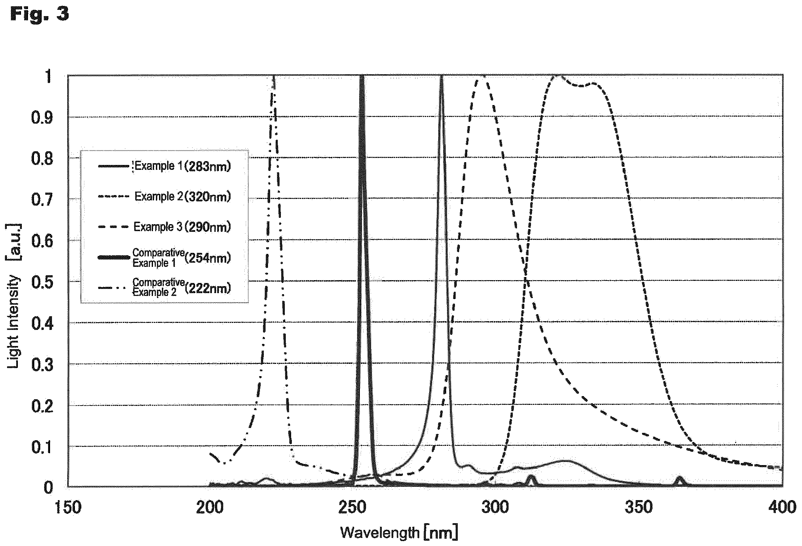

Fig. 3 shows an emission spectrum of each light source in Examples 1 to 3 and Comparative Examples 1 and 2.

### <Verification 1>

Several types of materials were prepared as the to-be-treated solutions 2, and each of the to-be-treated solutions 2 was irradiated with the ultraviolet light of Example 1 and Comparative Example 1 to perform odor analysis. There are four types of materials prepared as the to-be-treated solutions 2: coffee beverage, apple juice, lemon juice, and wine.

The irradiation conditions of ultraviolet light are as follows.
Flow rate of test solution in flow path for to-be-treated solution: 0.72 mL/hour
Ultraviolet light intensity in flow path for to-be-treated solution: 3.6 mW/cm²
Treatment time: 139 seconds
Ultraviolet light irradiation amount: 500 mJ/cm²
Temperature of to-be-treated solution during treatment: 20°C

An odor analysis test was conducted by the following method.

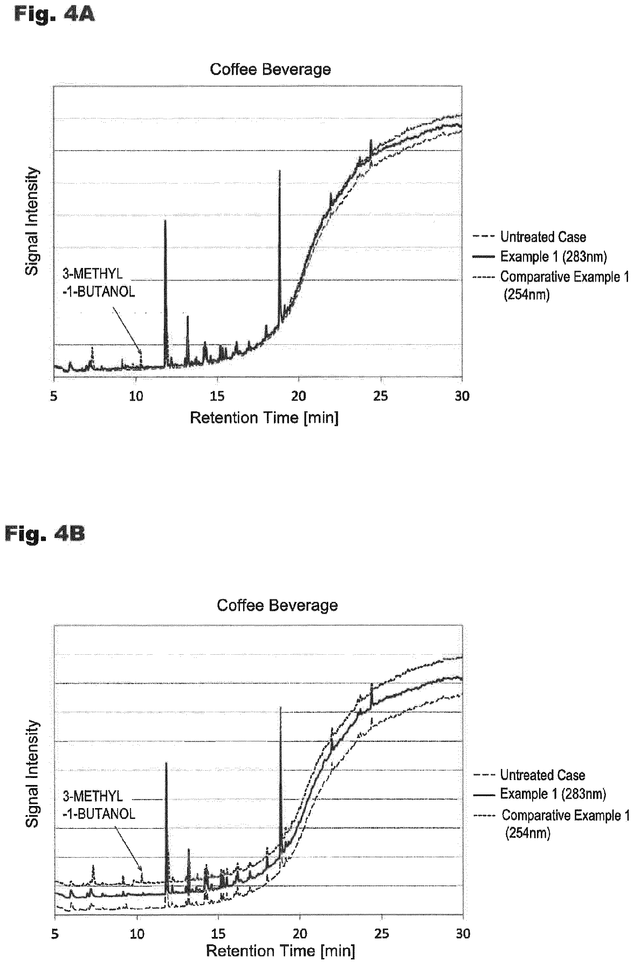

For each of the to-be-treated solution 2 after the ultraviolet light irradiation treatment, an odor component analysis test was conducted using a GC/MS/Olfactometry (Gas Chromatograph Mass Spectrometer QP-2010Plus manufactured by Shimadzu Corporation). More specifically, an analysis test was performed on each of the to-be-treated solution 2 after irradiation with ultraviolet light using the light source of Example 1 and the light source of Comparative Example 1. The results are shown in Figs. 4A, 4B, 5A, 5B, 6A, 6B, 7A, and 7B. In each graph of Figs. 4A to 7B, the horizontal axis represents a retention time, and the vertical axis represents intensity.

### (Coffee beverage)

Figs. 4A and 4B show the results when the to-be-treated solution 2 is a coffee beverage. For ease of viewing Fig. 4A, Fig. 4B is a graph obtained by redrawing the graphs of an untreated case, Example 1, and Comparative Example 1 by moving the graphs in parallel in a vertical axis direction. According to the results of Figs. 4A and 4B, in Comparative Example 1, 3-methyl-1-butanol that was not present in the untreated case and Example 1 was detected. Since 3-methyl-1-butanol is a substance having an unpleasant odor, it is confirmed that the odor changes from the state before the treatment by performing the treatment with the light source of Comparative Example 1.

From the analysis results of Figs. 4A and 4B, after light irradiation from the light source of Example 1, generation of new odor components other than coffee-derived odor components was not confirmed. In both Example 1 and Comparative Example 1, although some changes were seen in the amount of a substance contained compared to the untreated case, these changes were not recognized as sufficient to change the coffee-derived odor.

### (Apple Juice)

Figs. 5A and 5B show the results when the to-be-treated solution 2 is apple juice. For ease of viewing Fig. 5A, Fig. 5B is a graph obtained by redrawing the graphs of untreated case, Example 1, and Comparative Example 1 by moving the graphs in parallel in a vertical axis direction. According to the results of Figs. 5A and 5B, in Comparative Example 1, cycloheptanone that was not present in the untreated case and Example 1 was detected. Since cycloheptanone is a substance with a mint odor, it is confirmed that the treatment with the light source of Comparative Example 1 increases the odor component and changes the odor of the apple juice to an odor different from the original odor of the apple juice.

From the analysis results of Figs. 5A and 5B, after light irradiation from the light source of Example 1, generation of new odor components other than apple juice-derived odor components was not confirmed. In both Example 1 and Comparative Example 1, although some changes were seen in the amount of a substance contained compared to the untreated case, these changes were not recognized as sufficient to change the apple juice-derived odor.

### (Lemon Juice)

Figs. 6A and 6B show the results when the to-be-treated solution 2 is lemon juice. For ease of viewing Fig. 6A, Fig. 6B is a graph obtained by redrawing the graphs of untreated case, Example 1, and Comparative Example 1 by moving the graphs in parallel in a vertical axis direction. According to the results of Figs. 6A and 6B, it was confirmed that the strength of ethanol greatly increased in Comparative Example 1. Since ethanol is a substance with an alcoholic odor, it is confirmed that the treatment with the light source of Comparative Example 1 increases the odor component and changes the odor of the lemon juice to an odor different from the original odor of the lemon juice.

According to the results of Figs. 6A and 6B, in Comparative Example 1, limonene isomers that were not present in the untreated case and Example 1 was detected. In view of this result, it is considered that irradiation of the lemon juice with ultraviolet light from the light source of Comparative Example 1 destroys a portion of limonene which is a substance with a citrus odor to generate new limonene isomers. Thereby, it is considered that the original citrus odor of the lemon juice has been changed as compared with the untreated case and Example 1.

### (Wine)

Figs. 7A and 7B show the results when the to-be-treated solution 2 is wine. For ease of viewing Fig. 6A, Fig. 7B is a graph obtained by redrawing the graphs of untreated case, Example 1, and Comparative Example 1 by moving the graphs in parallel in a vertical axis direction. According to the results of Figs. 7A and 7B, it was confirmed that the strength of 3-methyl-1-butanol greatly increased in Comparative Example 1. Since 3-methyl-1-butanol is a substance with an unpleasant odor, it is confirmed that the treatment with the light source of Comparative Example 1 increases the odor component and changes the odor of the wine to an odor different from the original odor of the wine.

From the analysis results of Figs. 7A and 7B, in both Example 1 and Comparative Example 1, although some changes were seen in the amount of a substance contained compared to the untreated case, these changes were not recognized as sufficient to change the wine odor.

### <Verification 2>

A coffee beverage was prepared as the to-be-treated solution 2, and taste analysis was performed by irradiating the ultraviolet light of Example 1, Example 2 and Comparative Example 1. The irradiation conditions of ultraviolet light are the same as in verification 1.

A taste analysis test was conducted by the following method.

Each of the to-be-treated solutions 2 was subjected to the ultraviolet light irradiation treatment (sterilization treatment) using the reactor 10 described above. Then, for each of the to-be-treated solutions 2 after the ultraviolet light irradiation treatment, the taste analysis test was conducted using a taste sensor (taste recognition device "TS-5000Z" manufactured by Intelligent Sensor Technology, Inc.). The results are shown in Fig. 5.

The chart shown in Fig. 8 is shown in relative value when the numerical value of each item obtained by analysis of the original taste of the to-be-treated solution 2 without the ultraviolet light irradiation treatment is 0.0. In the taste analysis test using the taste recognition device, a threshold value at which a sensitive person can detect a difference in taste is about ± 0.8. The eight analysis items displayed in the chart of Fig. 8 are as follows.

### [Analysis items]

(1) Acidic taste (initial taste): acidic taste exhibited by citric acid and tartaric acid
(2) Bitterness and coarse taste (initial taste): substance derived from bitterness, which corresponds to richness, hidden taste, or the like at low concentrations
(3) Astringency stimulation (initial taste): acrid taste due to astringent substances
(4) Umami (initial taste): deliciousness of amino acids, nucleic acids, etc.
(5) Saltiness (initial state): saltiness of inorganic salts such as salt
(6) Bitterness (aftertaste): bitterness of taste found in general foods
(7) Astringency (aftertaste): astringency of aftertaste derived from astringent substances
(8) Umami and richness (aftertaste): persistent rich taste of umami substances

According to Fig. 8, when the treatment is performed using the light source of Comparative Example 1, it is confirmed that the bitterness and coarse taste are changed to such an extent that it can be recognized as compared with the untreated case. On the other hand, when the treatment is performed using the light sources of Examples 1 and 2, the bitterness and coarse taste are not changed to such an extent that a difference in taste can be recognized as compared with the untreated case.

When the same verification was performed on the to-be-treated solutions 2 as apple juice, lemon juice, and wine, although Comparative Example 2 showed a change in taste compared to Examples 1 and 2, it was confirmed that the amount of change was remained within ± 0.8.

From the above verification results, it was confirmed that when the coffee beverage was irradiated with ultraviolet light, not only the odor but also the taste changed when the light source of Comparative Example 1 was used.

### <Verification 3>

Coffee flavor, grape flavor, and orange flavor were prepared as the to-be-treated solution 2, and the ultraviolet light of Examples 1 to 3 and Comparative Examples 1 to 2 was irradiated to perform sensory evaluation of the taste analysis. Specifically, three samples for each of Examples and Comparative Examples contained in a transparent flour container (70 g) of ϕ71 mm were prepared, and 10 people confirmed whether a change in flavor was confirmed before and after irradiation with ultraviolet light. The results of the sensory evaluation are shown in Table 1. In Table 1, Evaluation A indicates that the percentage of people who have confirmed the change in flavor is less than 3%, Evaluation B indicates that the percentage of people who have confirmed the change in flavor is 3% or more and less than 40%, and Evaluation C indicates that the percentage of people who have confirmed the change in flavor is 40% or more.

**[Table 1]**

| To-be-treated solution | Example 1 (283 nm) | Example 2 (320 nm) | Example 3 (290 nm) | Comparative Example 1 (254 nm) | Comparative Example 2 (222 nm) |
|---|---|---|---|---|---|
| Coffee flavor | A | A | A | C | C |
| Grape flavor | A | A | A | B | C |
| Orange flavor | A | A | A | B | C |

As for the coffee flavor, it was confirmed that after light irradiation from the light source of Comparative Example 1, the flavor was reduced as compared with before the light irradiation. Furthermore, it was confirmed that after light irradiation from the light source of Comparative Example 2, the flavor was reduced, and, at the same time, coarse taste increased as compared with before the light irradiation. On the other hand, after light irradiation from each of the light sources of Examples 1 to 3, deterioration of flavor was hardly confirmed as compared with before the light irradiation.

As for the grape flavor, it was confirmed that after light irradiation from the light source of Comparative Example 1, the flavor and aftertaste were reduced as compared with before the light irradiation. Furthermore, it was confirmed that after light irradiation from the light source of Comparative Example 2, the taste became light as compared with before the light irradiation. On the other hand, after light irradiation from each of the light sources of Examples 1 to 3, deterioration of flavor was hardly confirmed as compared with before the light irradiation.

As for the orange flavor, it was confirmed that after light irradiation from the light source of Comparative Example 1, the flavor was reduced as compared with before the light irradiation. Furthermore, it was confirmed that after light irradiation from the light source of Comparative Example 2, the taste became light as compared with before the light irradiation. On the other hand, after light irradiation from each of the light sources of Examples 1 to 3, deterioration of flavor was hardly confirmed as compared with before the light irradiation.

### <Verification 4>

Bacillus cereus (JCM2152) in a spore state was used as a test bacterium, and a predetermined amount of the test bacteria was suspended in the to-be-treated solution 2 to prepare a test solution such that the number of bacteria initially generated was 10⁵ CFU/mL. Here, a coffee jelly flavor was adopted as the to-be-treated solution 2.

A test solution before the ultraviolet light irradiation treatment (sterilization treatment) and a test solution after the ultraviolet light irradiation treatment (sterilization treatment) using the light source of Example 1 under the same conditions as in Verification 1 were applied onto an agar medium and cultured at 30°C for 48 hours, and the number of colonies generated on the agar medium was then examined. The results are shown in Fig. 9. According to Fig. 9, it was confirmed that even when the light source of Example 1 was used, the sterilization effect was ensured. In addition, it was confirmed that by suitably setting the treatment time, the sterilization effect was ensured even when the light sources of Example 2 and Example 3 were used.

As an example, when the light source of Example 1 was used, the treatment time was 55 seconds or more and 84 seconds or less, and when the light source of Example 2 was used, the treatment time was 100 seconds or more and 300 seconds or less. The treatment time is sufficiently longer than the time (ms order) of sterilization treatment using a flash lamp in the food field such as meat and fish. Meat and fish contain a lot of oil, which is altered by absorbing light. Thus, in the food field, a method of irradiating light for an extremely short time to instantaneously increase the temperature and thus to perform sterilization treatment may be used.

According to the above verification results, it is considered that some components (e.g., compounds such as sugars, lipids, proteins, and carbohydrates) contained in beverages change due to the action of light and change the flavor. In particular, it can be seen that components contained in coffee beverages, fruit juice beverages including fruit juices such as apple juice and lemon juice, and alcoholic beverages such as wine include substances that change due to the action of light and change their flavor. In the field of beverages, the present invention newly discovers that a change in odor and taste occurs by irradiating ultraviolet light in a predetermined wavelength band in the field of beverages, and then ultraviolet light in a specific wavelength band excluding the predetermined wavelength band is irradiated, so that it is possible to suppress change/deterioration of odor and taste while ensuring the sterilization effect.

By the way, light has higher energy as the wavelength is shorter. According to the analysis described above, it is assumed that when the treatment is performed using the light source of Comparative Example 1 having a peak wavelength of 254 nm (half value is 251 to 257 nm), binding of a substance inherent in the to-be-treated solution 2 is broken, for example, so that new substances are generated or the amount of substances already contained has changed significantly. In view of this, it is considered that when light of a light source having a shorter wavelength than that of the light source of Comparative Example 1 is used, odor and taste further change. This point also appears in the results when each sample has been irradiated with light from the light source of Comparative Example 2 in Verification 3.

On the other hand, when the treatment was performed using the light source of Example 1, no significant changes in odor and taste were confirmed compared to the untreated case. In view of this, it is considered that when light of a light source having a longer wavelength than that of the light source of Example 1 is used, a degree of change in odor and taste is equal to or less than that of Example 1. This point also appears in the results when each sample was irradiated with light from the light sources of Examples 2 and 3 in Verification 3.

As shown in Verification 4, even when the light sources of Examples 2 and 3 were used, the sterilization effect was confirmed. Therefore, it can be seen that when ultraviolet light having an emission wavelength of 260 nm or less is not substantially irradiated and ultraviolet light having an emission wavelength of 280 nm or more and 320 nm or less is irradiated, the sterilization treatment can be performed while suppressing changes in taste and odor.

Fig. 10 is a graph showing relative values of sterilization power for each wavelength when the same amount of light is irradiated. In Fig. 10, the horizontal axis represents the wavelength, and the vertical axis represents the relative value of the sterilization power for each wavelength when the sterilization power at 254 nm is 100%. The sterilization power of light having a wavelength of 280 nm is about 60% with respect to a wavelength of 254 nm. The sterilization power of light having a wavelength longer than 320 nm is 0.001% or less with respect to the wavelength of 254 nm.

The ability of sterilization is improved by increasing an amount of irradiation light. That is, the ability of sterilization can be substantially ensured at a practical level by adjusting the output of the light source and the irradiation time. However, for light in the wavelength range longer than 320 nm, the sterilization effect cannot be sufficiently ensured unless the output of the light source is made extremely high and an extremely long irradiation time is ensured. In particular, as shown in Fig. 1, when it is assumed that sterilization is performed by irradiating light from a light source while flowing the to-be-treated solution 2 in the flow path 3, in a case of employing a light source that emits light having a wavelength longer than 320 nm, in order to ensure an extremely long irradiation time, it is necessary to extremely slow the flow rate of the to-be-treated solution 2 and to extremely lengthen the length of the light source in the flow path direction, which is not practical.

In view of the above points, it can be seen that when ultraviolet light having an emission wavelength of 260 nm or less is not substantially irradiated and ultraviolet light having an emission wavelength of 280 nm or more and 320 nm or less is irradiated, the sterilization treatment can be performed while suppressing changes in taste and odor under practical device design.

### DESCRIPTION OF REFERENCE SIGNS

- 2: To-be-treated solution
- 3: Flow path
- 5: Central axis of reactor
- 10: Reactor
- 11: Outer pipe
- 12: Inner pipe
- 20: Ultraviolet light irradiation device

## Claims

1. A sterilization method comprising irradiating a to-be-treated solution, which is a beverage other than water, with ultraviolet light having an emission wavelength of 280 nm or more and 320 nm or less without substantially irradiating the to-be-treated solution with ultraviolet light having an emission wavelength of 260 nm or less.

2. A sterilization device comprising an ultraviolet light irradiation device which irradiates a to-be-treated solution, which is a beverage other than water, with ultraviolet light, having a main emission wavelength of 280 nm or more and 320 nm or less and substantially free of components having an emission wavelength of 260 nm or less, along a flow path through which the to-be-treated solution flows.

3. A sterilization method comprising irradiating a to-be-treated solution, which is a coffee beverage, with ultraviolet light having a main emission wavelength of 280 nm or more and 320 nm or less and substantially free of components having an emission wavelength of 260 nm or less.

4. A sterilization method comprising irradiating a to-be-treated solution, which is a fruit juice beverage, with ultraviolet light having a main emission wavelength of 280 nm or more and 320 nm or less and substantially free of components having an emission wavelength of 260 nm or less.

5. A sterilization method comprising irradiating a to-be-treated solution, which is an alcoholic beverage, with ultraviolet light having a main emission wavelength of 280 nm or more and 320 nm or less and substantially free of components having an emission wavelength of 260 nm or less.
